Europäisches Patentamt

European Patent Office

Office européen des brevets

(19)

(11) Veröffentlichungsnummer: **0 201 479**
**B1**

(12) **EUROPÄISCHE PATENTSCHRIFT**

(45) Veröffentlichungstag der Patentschrift: **28.11.90**

(21) Anmeldenummer: **86890129.9**

(22) Anmeldetag: **07.05.86**

(51) Int. Cl.⁵: **B 29 C 65/18,** F 16 L 47/02,
H 05 B 3/58 // B29L23:22

(54) Vorrichtung zum Verschweissen zweier einander übergreifender Rohrteile aus Kunststoff.

(30) Priorität: **10.05.85 AT 1410/85**

(43) Veröffentlichungstag der Anmeldung:
**12.11.86 Patentblatt 86/46**

(45) Bekanntmachung des Hinweises auf die
Patenterteilung:
**28.11.90 Patentblatt 90/48**

(84) Benannte Vertragsstaaten:
**CH DE FR IT LI NL SE**

(56) Entgegenhaltungen:
**WO-A-85/00263
DE-A-1 704 131
DE-A-1 704 205
DE-A-2 405 333
DE-B-1 206 572
DE-U-1 849 053
US-A-2 786 264
US-A-3 133 846
US-A-4 132 578**

(73) Patentinhaber: **Kunststoffwerk Karl Egger
Ignaz-Mayer-Strasse 17
A-4017 Linz (AT)**

(72) Erfinder: **Egger, Karl
Merianweg 20
A-4020 Linz (AT)**
Erfinder: **Ing. Lucian Halada
Ödmühlweg 16
A-4040 Linz (AT)**

(74) Vertreter: **Hübscher, Gerhard, Dipl.-Ing. et al
Patentanwälte Dipl.-Ing. Gerhard Hübscher
Dipl.-Ing. Helmut Hübscher Dipl.-Ing. Heiner
Hübscher Spittelwiese 7
A-4020 Linz (AT)**

Courier Press, Leamington Spa, England.

## Beschreibung

Die Erfindung betrifft eine Vorrichtung zum Verschweißen zweier einander übergreifender Rohrteile aus Kunststoff, insbesondere eines Rohres mit einer aufgeschobenen Muffe, unter Verwendung eines den äußeren Rohrteil umfassenden, zugleich als elektrischer Heizkörper ausgebildeten und daher über zwei Anschlußstellen mit einer Stromquelle verbindbaren Spannelementes, das zwei auseinanderdrückbare Endbacken trägt.

Es ist ein Spannelement dieser Art bekannt (DE-OS 1 704 205), das als Schelle ausgebildet ist und aus einem verhältnismäßig breiten Metallband besteht, dessen die beiden Endbacken tragenden Enden beim Umspannen der beiden Rohrteile einander mehr oder weniger weit überlappen. Die Endbacken sind an den beiden Bandenden mit Hilfe von seitlichen Stegen derart unlösbar verbunden, daß das eine Bandende zwischen den Backenstegen des anderen Bandendes durchgesteckt werden kann. Dabei geht es darum, zwei stumpf aneinanderstoßende Kunststoffrohre mittels eines diese im Stoßbereich umschließenden Zusatzwerkstoffes im Schweißverfahren zu verbinden, wobei eine über den ganzen Rohrumfang gleichmäßige Erwärmung und Druckausübung von keiner großen Bedeutung ist, weil durch den schmelzenden Zusatzwerkstoff ohnehin auf jeden Fall eine dichte Rohrverbindung zustandekommt. Es ist daher auch von untergeordneter Bedeutung, daß das die Schelle bildende Metallband im Überlappungsbereich seiner Enden nicht voll auf dem Rohrumfang aufliegt. Sollen dagegen zwei einander übergreifende Rohrteile ohne Zusatzwerkstoff verschweißt werden, könnten im Überlappungsbereich wegen ungleichmäßiger Erwärmung und Druckausübung undichte bzw. unvollkommen verschweißte Stellen auftreten. Da die Endbacken mit den Enden des Metallbandes fix verbunden sind, ist das Spannelement nur für Rohre geeignet, deren Durchmesser zwischen vergleichsweise engen Grenzen schwankt. Sollen dagegen Rohre ganz verschiedenen Durchmessers verschweißt werden, so müssen jeweils vollständige Spannelemente entsprechend unterschiedlicher Größe auf Lager gehalten werden, was den technischen Aufwand wesentlich erhöht.

Somit liegt der Erfindung die Aufgabe zurunde, diese Mängel zu beseitigen und die eingangs geschilderte Vorrichtung so zu verbessern, daß tatsächlich eine gleichmäßige Erwärmung und Druckausübung über den ganzen Rohrumfang erfolgt und sich außerdem eine Vereinfachung in der Lagerhaltung und Handhabung ergibt.

Die Erfindung löst die gestellte Aufgabe dadurch, daß das Spannelement zwei parallele Metallbänder aufweist, wobei an ihren einen Endbereichen die Stromanschlüsse angeordnet sind und ihre anderen Endbereiche mit einem Einzelband, dessen Breite höchstens dem Abstand der beiden Metallbänder voneinander entspricht, leitend verbunden sind und wobei die freien Enden der beiden Metallbänder und des Einzelbandes mit Kuppelgliedern, vorzugsweise Steckstiften, zur Befestigung der Endbacken versehen sind.

Durch diese Ausbildung des Spannelementes ist es möglich, das Einzelband zwischen den zwei parallelen Bändern durchzuziehen, also mit einander kreuzenden Bandenden zu arbeiten und so den eingeschlossenen Rohrteil, insbesondere die eingeschlossene Muffe, ohne jede Unterbrechungsstelle zu umschlingen, wodurch die gleichmäßige Erwärmung und Druckausübung gesichert werden. Da die Endbacken mit den freien Enden der beiden Metallbänder und des Einzelbandes lösbar gekuppelt sind, ist es möglich, die Endbacken mit einer Vorrichtung zum Auseinanderdrücken abzunehmen und auf Bänder wesentlich größerer Länge für ein entsprechend größeres Rohr aufzusetzen. Es brauchen daher nur Metall- bzw. Einzelbänder verschiedener Länge vorgesehen zu werden, wogegen die eigentliche Spannvorrichtung, nämlich die Backen, mit dem Mittel zum Auseinanderdrücken, für alle Größen gleichbleibt. Dazu kommt noch, daß die Handhabung der Gesamtvorrichtung wesentlich vereinfacht wird, wenn man zunächst bloß die Metallbänder bzw. das Einzelband um das Rohr zu legen braucht und dann erst die Spannbacken aufsetzen kann.

In weiterer Ausbildung der Erfindung ist zum Auseinanderdrücken der beiden auf einer Führung verschiebbar gelagerten Endbacken eine Schraubenspindel vorgesehen, die sich an einer Endbacke über eine Druckfeder abstützt. Durch diese Feder wird ein dauernder Spreizdruck auf die beiden Backen ausgeübt, so daß der Spanndruck der Metallbänder während des Schweißvorganges erhalten bleibt, ohne die sich beim Schweißen ergebende Durchmesserverringerung des Rohres bzw. der Muffe im Bereich der Vorrichtung laufend mit der Schraubenspindel ausgleichen zu müssen.

In der Zeichnung ist der Erfindungsgegenstand beispielsweise vereinfacht dargestellt, und zwar zeigen

Fig. 1 eine Vorrichtung zum Verschweißen zweier einander übergreifender Rohrteile ohne Endbacken in Streckstellung,

Fig. 2 die Backen mit der Schraubenspindel in Draufsicht und

Fig. 3 die Vorrichtung in Gebrauchsstellung im Schnitt quer zur Rohrachse.

Das zugleich als Heizelement dienende Spannelement weist zwei parallele Metallbänder 1 auf, die an ihrem einen Endbereich mit einem Einzelband 2 leitend verbunden sind, dessen Breite dem Abstand der beiden Metallbänder 1 voneinander entspricht. An ihren anderen Endbereichen tragen die Metallbänder 1 Stromanschlüsse 3. Beim Umschlingen einer Muffe od. dgl. kann das Einzelband 2 zwischen den parallelen Metallbändern 1 durchgezogen werden.

Am Ende des Einzelbandes 2 und im Endbereich der Metallbänder 1 sind Kuppelglieder 4 in Stiftform für den Angriff eines allgemein mit 5 bezeichneten Spanntriebes vorgesehen. Dieser Spanntrieb 5 weist zwei Endbacken 6a, 6b auf, die auf zwei eine Führung bildenden Stangen oder Rohren 7 relativ zueinander verschiebbar sind. Die Endbacken 6a, 6b sind mit Bohrungen 8 versehen, in die die Kuppelglieder bzw. Stifte 4 eingreifen können. Die Endbacke 6b besitzt ein Muttergewinde 9 für eine sie durchsetzende Schraubenspindel 10. Diese Schraubenspindel 10 stützt sich an der anderen Backe 6a über eine Druckfeder 11 ab und trägt einen Handgriff 12.

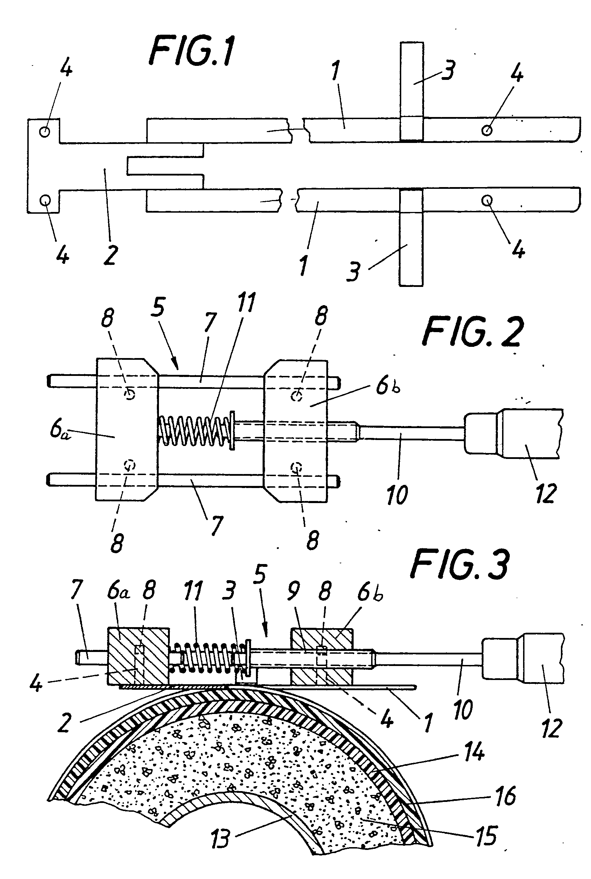

Gemäß Fig. 3 soll ein zur Fernwärmeversorgung dienendes Mantelrohr, das aus einem Innenstahlrohr 13, einem Außenmantel 14 und einer Schaumstoffzwischenschicht 15 besteht, mit einer Verbindungsmuffe 16 verschweißt werden. Das Spannelement 1, 2 wird auf die Muffenaußenseite aufgebracht, so daß es die Muffe 16 umschlingt. Dann wird der Spanntrieb 5 über die Kuppelglieder 4 mit den Enden des Spannelementes 1, 2 verbunden, es werden die Endbacken 6a, 6b mit Hilfe der Schraubenspindel 10 zur Erzeugung des Preßdruckes auseinandergeschoben, und es werden schließlich die Metallbänder 1 mit Hilfe der Anschlußfahnen 3 an Spannung gelegt.

## Patentansprüche

1. Vorrichtung zum Verschweißen zweier einander übergreifender Rohrteile aus Kunststoff, insbesondere eines Rohres (13, 14, 15) mit einer aufgeschobenen Muffe (16), unter Verwendung eines den äußeren Rohrteil umfassenden, zugleich als elektrischer Heizkörper ausgebildeten und daher über zwei Anschlußstellen (3) mit einer Stromquelle verbindbaren Spannelementes, das zwei auseinanderdrückbare Endbacken trägt, dadurch gekennzeichnet, daß das Spannelement zwei parallele Metallbänder (1) aufweist, wobei an ihren einen Endbereichen die Stromanschlüsse (3) angeordnet sind und ihre anderen Endbereiche mit einem Einzelband (2), dessen Breite höchstens dem Abstand der beiden Metallbänder (1) voneinander entspricht, leitend verbunden sind und wobei die freien Enden der beiden Metallbänder (1) und des Einzelbandes (2) mit Kuppelgliedern, vorzugsweise Steckstiften (4), zur Befestigung der Endbacken (6a, 6b) versehen sind.

2. Vorrichtung nach Anspruch 1, dadurch gekennzeichnet, daß zum Auseinanderdrücken der beiden, auf einer Führung (7) verschiebbar gelagerten Endbacken (6a, 6b) eine Schraubenspindel (10) vorgesehen ist, die sich an einer Endbacke (6a) über eine Druckfeder (10) abstützt.

## Revendications

1. Dispositif pour souder ensemble deux éléments de tube en matière plastique emboîtés l'un dans l'autre, en particulier un tube (13, 14, 15) avec un manchon (16) glissé par-dessus, moyennant l'emploi d'un organe de serrage qui, embrassant l'élément de tube extérieur, réalisé en même temps sous la forme de corps chauffant électrique et pouvant par conséquent être relié à une source de courant électrique par l'intermédiaire de deux points (3) de connexion, porte deux mâchoires d'extrémité pouvant être écartées l'une de l'autre par la force d'une pression, caractérisé par le fait que l'organe de serrage présente deux rubans métalliques (1) parallèles, tandis que les connexions (3) pour le courant sont disposées à l'une de leurs zones d'extrémité et que leur autre zone d'extrémité est reliée de manière électriquement conductrice à un ruban (2) unique dont la largeur équivaut au plus à l'écartement des deux rubans métalliques (1), tandis que les extrémités libres des deux rubans métalliques (1) et du ruban (2) unique sont munies d'organes de couplage, de préférence de tétons (4) enfichables pour la fixation des mâchoires (6a, 6b) d'extrémité.

2. Dispositif suivant la revendication 1, caractérisé par le fait qu'une broche filetée (10) qui prend appui par l'intermédiaire d'un ressort (11) travaillant à la compression sur une mâchoire (6a) d'extrémité est prévue pour écarter par la force d'une pression les deux mâchoires (6a, 6b) d'extrémité montées de manière coulissante sur un guidage (7).

## Claims

1. An apparatus for welding two interfitting tubular members of plastic particularly consisting of a tube (13, 14, 15) and a sleeve (16) fitted on the tube, by means of a clamping element, which surrounds the outer tubular member and constitutes also an electric heater and for that purpose is adapted to be connected via two terminals (3) to a source of current and carries two end jaws, which are adapted to be forced apart, characterized in that the clamping element comprises two parallel metal strips (1), the terminals (3) are provided at one end of each of said strips, said metal strips are conductively connected at their other end to an individual strip, which has a width that is not in excess of the distance between the two metal strips, and the free ends of the two metal strips (1) and of the individual strip (2) are provided with coupling elements, preferably plug pins (4), for fixing the end jaws (6a, 6b).

2. An apparatus according to claim 1, characterized in that a screw (10) is provided, which bears by means of a compression spring (10) on one end jaw (6a) and serves to force the two end jaws (6a, 6b) apart, which are slidably mounted on a guide (7).

FIG.1

FIG.2

FIG.3